(19) Europäisches Patentamt
European Patent Office
Office européen des brevets

(11) **EP 2 319 730 B1**

(12) **EUROPÄISCHE PATENTSCHRIFT**

(45) Veröffentlichungstag und Bekanntmachung des Hinweises auf die Patenterteilung:
**12.11.2014 Patentblatt 2014/46**

(51) Int Cl.:
**B60Q 1/12** (2006.01)   **B60W 40/072** (2012.01)
**G01C 21/26** (2006.01)   **B60W 40/076** (2012.01)

(21) Anmeldenummer: **10011392.7**

(22) Anmeldetag: **29.09.2010**

(54) **Verfahren zum Betrieb eines prädiktiven Kurvenlichtsystems in einem Kraftfahrzeug und Kraftfahrzeug**

Method for operating a predictive adaptive light system in a motor vehicle and motor vehicle

Procédé de fonctionnement d'un système d'éclairage adaptatif prédictif dans un véhicule automobile et véhicule automobile

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **06.11.2009 DE 102009052187**

(43) Veröffentlichungstag der Anmeldung:
**11.05.2011 Patentblatt 2011/19**

(73) Patentinhaber: **Audi AG**
**85045 Ingolstadt (DE)**

(72) Erfinder:
• **Funk, Christian**
**85080 Gaimersheim (DE)**
• **Kenn, Christoph**
**53489 Sinzig (DE)**
• **Siedersbeck, Alfons**
**94560 Offenberg (DE)**
• **Wölfer, Lars**
**06526 Sangerhausen (DE)**

(74) Vertreter: **Thielmann, Frank**
**AUDI AG**
**Patentabteilung**
**85045 Ingolstadt (DE)**

(56) Entgegenhaltungen:
EP-A1- 1 415 856    EP-A1- 1 873 493
EP-A2- 1 593 936    EP-A2- 1 905 643
DE-A1-102005 033 841   DE-A1-102006 030 527
US-A1- 2002 080 617

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Betrieb eines prädiktiven Kurvenlichtsystems in einem Kraftfahrzeug, wobei den zukünftigen Straßenverlauf beschreibende Verlaufsdaten bei der Ansteuerung wenigstens eines Frontscheinwerfers des Kraftfahrzeugs berücksichtigt werden.

Es sind Kraftfahrzeuge bekannt, bei denen im Straßenverkehr zur Beleuchtung der Fahrbahn nur eine Lichtverteilung (Ausleuchtbereich) existiert. Diese ist üblicherweise asymmetrisch ausgeführt, bei Rechtsverkehrs auf der linken Hälfte um ein Prozent vertikal beschnitten und stellt einen Kompromiss für unterschiedliche Arten von Straßen dar. Gerade bei Kurvenfahrten liefert ein derartiger starrer Ausleuchtbereich jedoch keine zufriedenstellende Ausleuchtung. Daher wurde vorgeschlagen, den Ausleuchtbereich in Abhängigkeit der Kurvigkeit anzupassen.

Ein erstes Ergebnis war die sogenannten dynamischen Kurvenlichtsysteme, bei welchen der wenigstens eine Frontscheinwerfer des Kraftfahrzeugs in Abhängigkeit einer den aktuellen Fahrzustand des Kraftfahrzeugs, insbesondere die Fahrdynamik, beschreibenden Größe, beispielsweise des Lenkwinkels, in die Kurveninnenseite geschwenkt wird.

Kürzlich wurde jedoch eine Erweiterung solcher Kurvenlichtsysteme beschrieben, die eine besser an die Streckenführung angepasste Verschwenkung der Frontscheinwerfer erlaubt, wenn auch prädiktive Streckendaten, die beispielsweise aus einem Navigationssystem und/oder einer Kamera gewonnen werden können, hinzugezogen werden. Solche Kurvenlichtsysteme, bei denen der Ausleuchtbereich des wenigstens einen Frontscheinwerfers abhängig von einem vorhergesagten zukünftigen Streckenverlauf angepasst wird, werden als prädiktive Kurvenlichtsysteme bezeichnet.

Werden solche den zukünftigen Straßenverlauf beschreibende Verlaufsdaten verwendet, so stellt sich die wichtige Frage, inwieweit diese Daten plausibel sind, das bedeutet, tatsächlich hinreichend genau den zukünftigen Straßenverlauf beschreiben. Mit anderen Worten ist die Plausibilisierung der Eingangsdaten eine entscheidende Aufgabe in der Entwicklung von prädiktiven Kurvenlichtsystemen, um entscheiden zu können, in welcher Genauigkeit die Verlaufsdaten zur Verfügung stehen. Nicht plausible Verlaufsdaten können beispielsweise zu Blendungen des Gegenverkehrs führen und die Systemakzeptanz des Nutzers durch schlechte Ausleuchtung verschlechtern.

Man könnte hier ein Verfahren vorschlagen, in dem die Momentankrümmung der Straße, wie sie aus den Verlaufsdaten folgt, mit einer Momentankrümmung, wie sie aus anderen Daten, beispielsweise Sensordaten, folgt, verglichen wird. Insbesondere bei der Verwendung von digitalen Kartendaten, beispielsweise den Daten eines Navigationssystems, sind derartige Vergleiche wenig aussagekräftig, da die Krümmung aus den digitalen Kartendaten meist sehr verrauscht ist. Dies begründet sich darin, dass allein die Punkte selber im meist verwendeten WGS84-Koordinatensystem sehr verrauscht sind, so dass die Rekonstruktion der Krümmung über die Darstellung des Streckenverlaufs mit Klothoiden/Splines äußerst schwierig ist. Dieser Effekt wird verstärkt, wenn man berücksichtigt, dass die Krümmung im Wesentlichen durch erste und zweite Ableitungen der Ortsänderung definiert wird.

Die Druckschriften US 2002/0080617 A1 und EP 1 415 856 A1 offenbaren jeweils ein Verfahren zur Plausibilisierung der Daten eines Navigationssystems unter Verwendung von Sensordaten.

Der Erfindung liegt daher die Aufgabe zugrunde, eine Möglichkeit anzugeben, eine verlässliche und aussagekräftige Plausibilisierung von in einem prädiktiven Kurvenlichtsystem verwendeten Verlaufsdaten zu realisieren.

Zur Lösung dieser Aufgabe ist bei einem Verfahren der eingangs genannten Art erfindungsgemäß vorgesehen, dass zur Plausibilisierung der Verlaufsdaten aus einer aus den Verlaufsdaten abgeleiteten, den Straßenverlauf über einen an der aktuellen Position des Kraftfahrzeugs endenden Fahrtstreckenabschnitt beschreibenden Größe, insbesondere der Kurvigkeit, und einer aus die Fahrdynamik des Kraftfahrzeugs beschreibenden Messdaten für denselben Fahrtstreckenabschnitt ermittelten Vergleichsgröße, insbesondere Vergleichskurvigkeit, ein die Plausibilität der Verlaufsdaten beschreibender Fehlerwert ermittelt und bei der Ansteuerung des Frontscheinwerfers berücksichtigt wird.

Es wird folglich vorgeschlagen, die Plausibilisierung nicht über die Momentankrümmung zu realisieren, sondern über eine Größe, die über einen längeren Fahrtstreckenabschnitt die Strecke beschreibt. Mit besonderem Vorteil wird als Größe die sogenannte Kurvigkeit gewählt. Diese ist definiert als die Summe des Betrags der Winkeländerungen über deren Wegstrecke, folglich

$$K = \frac{\sum |\gamma_i|}{L},$$

wobei $\gamma_i$ die Winkeländerung über den i-ten Teilabschnitt bezeichnet und L die gesamte Wegstrecke, über die die Kurvigkeit betrachtet wird, also

$$L = \sum L_i.$$

Obwohl im Folgenden hauptsächlich die Kurvigkeit selber als Größe diskutiert werden wird, da sich so die besten Ergebnisse erzielen lassen, sind grundsätzlich auch andere Definitionen solcher Größen denkbar, beispielsweise kann auch der Betrag der Summe der Winkeländerungen über der Länge des Fahrtstreckenabschnitts betrachtet werden, da es für die Plausibilitätsprüfung nicht auf die konkrete Aussagekraft der Kurvigkeit ankommt.

Der Vorteil einer solchen Größe, insbesondere aber der Kurvigkeit, ist, dass sie zum einen keine Ableitungen enthält, zum anderen aber auch eine bestimmte Wegstrecke (den Fahrtstreckenabschnitt) betrachtet und folglich weniger Sprünge aufweist, so dass sich sowohl für die aus den Verlaufsdaten ermittelte Größe als auch für die aus den aktuellen Zustand des Kraftfahrzeugs beschreibenden Messdaten ermittelten Vergleichsgröße ein glatterer und somit bei weitem besser zu vergleichender Verlauf ergibt. Es ist folglich möglich, durch Vergleich der beiden Größen, insbesondere der Kurvigkeiten, einen Fehlerwert zu ermitteln, der die Plausibilität der Verlaufsdaten beschreibt und der bei der Ansteuerung des wenigstens einen Frontscheinwerfers, insbesondere der zwei Frontscheinwerfer, berücksichtigt wird.

Über eine derartige zuverlässige Plausibilisierung der Eingangsdaten ist folglich die Realisierung einer prädiktiven Lichtsteuerung im Rahmen eines prädiktiven Kurvenlichtsystems möglich, so dass Blendungen des Gegenverkehrs vermieden und die Systemakzeptanz durch den Nutzer erhöht wird.

Zweckmäßigerweise können als Messdaten insbesondere mittels wenigstens einem Sensor bestimmte, die jeweils aktuelle Winkeländerung aufgrund der Fahrdynamik des Kraftfahrzeugs und die zurückgelegte Strecke während eines Zeitabschnitts beschreibende Messdaten verwendet werden. Zur Ermittlung der Winkeländerung bietet sich aufgrund der großen Genauigkeit der Messung an, dass die Winkeländerung aufgrund der Daten eines Gierratensensors ermittelt wird. Denkbar ist es jedoch auch, andere Sensoren zu verwenden, beispielsweise einen Lenkwinkelsensor und/oder einen Querbeschleunigungssensor und/oder Raddrehzahlsensoren, wobei die Raddrehzahldifferenz als Grundlage zur Ermittlung der Winkeländerung verwendet wird. Diese (und auch andere) Sensoren liefern ihre Daten letztlich in einer bestimmten Frequenz an ein Steuergerät des Kurvenlichtsystems, beispielsweise alle 20 ms. Hierdurch kann letztlich ein Zeitabschnitt definiert werden, der jeweils betrachtet wird. Ermittelt werden muss folglich auch, welche Strecke innerhalb dieses Zeitabschnitts zurückgelegt wurde. Dafür kann die in heutigen Kraftfahrzeugen ohnehin bekannte Geschwindigkeit des Kraftfahrzeugs herangezogen werden. Beispielsweise kann zur Ermittlung der zurückgelegten Strecke während des Zeitabschnitts ein Mittelwert der zu Beginn und zu Ende des Zeitabschnitts bekannten aktuellen Geschwindigkeiten mit der Länge des Zeitabschnitts multipliziert werden. Ist aber die zurückgelegte Strecke sowie die Winkeländerung über diese zurückgelegte Strecke bekannt, so kann eine aktuelle Kurvigkeit oder verwandte Größe, die selbstverständlich vorteilhafterweise über wenigstens zwei dieser Zeitabschnitte betrachtet wird, leicht ermittelt werden.

Dabei bietet es sich an, dass der Fahrtstreckenabschnitt über ein Zeitintervall definiert ist, welches insbesondere 2 - 10, bevorzugt 5 Sekunden, beträgt. Es werden also keine in ihrer Länge festen Streckenabschnitte betrachtet, sondern jeweils Zeitfenster. Dies begründet sich darin, dass eine Fensterung über die Länge der zurückgelegten Strecke in vielen Fällen bereits deswegen nicht möglich ist, da keine zeitsynchronen Daten vorliegen. Daher erfolgt die Plausibilisierung aufgrund einer zeitlichen Fensterung, beispielsweise mit einer Historie von 5 Sekunden. In diesen 5 Sekunden können dann beispielsweise, wenn ein Zeitabschnitt die Dauer von 20 Millisekunden aufweist, 250 Zeitabschnitte liegen. Der Fahrtstreckenabschnitt wird folglich jeweils durch die während einer bestimmten Anzahl von Zeitabschnitten zurückgelegte Strecke definiert. Dadurch wird es auch besonders einfach, die Werte der Kurvigkeit immer aktuell zu halten, da immer die älteste Winkeländerung und die zugehörige Strecke wegfallen sowie die aktuelle Winkeländerung und die dabei zurückgelegte Strecke hinzugefügt werden.

Wie bereits angedeutet wurde, können die Messdaten jeweils für einen Zeitabschnitt von 10 - 50 Millisekunden, insbesondere 20 Millisekunden, bestimmt werden. Der konkrete Wert ist vorzugsweise von der Frequenz abhängig, in der die jeweils aktuellen Messdaten zur Verfügung stehen.

Zur Bestimmung des Fehlerwerts kann mit besonderem Vorteil neben einer Differenz der aktuellen Größen, insbesondere der Kurvigkeiten, auch der Verlauf der Größen, bevorzugt wiederum der Kurvigkeiten, insbesondere die Änderung der Größen, bevorzugt Kurvigkeiten, zwischen aufeinanderfolgenden Zeitabschnitten und/oder die Ableitung des Verlaufs, zur Bestimmung des Fehlerwerts berücksichtigt werden. Stellt man sich die jeweils aktuelle Kurvigkeit als eine Verlaufskurve dar, so wird folglich nicht nur der Abstand zwischen den beiden Kurven zum aktuellen Zeitpunkt betrachtet, sondern es wird auch berücksichtigt, welche Steigung die Kurven gerade haben. Auf diese Weise kann insbesondere vermieden werden, dass bei gegenläufigen Kurvigkeitsverläufen, die sich in einem Punkt schneiden, dennoch eine hervorragende Plausibilität festgestellt wird. In dieser Ausgestaltung ist also eine differenziertere Betrachtung möglich, die eine noch genauere Plausibilisierung erlaubt.

Der ermittelte Fehlerwert kann zur Anpassung einer Vorausschaureichweite verwendet werden. In diesem Fall wird er beispielsweise als eine Art Standardabweichung der Verlaufsdaten verstanden, die deren Verlässlichkeit angibt und folglich auch beschreibt, ob daraus ein eher langstreckiger oder ein eher kurzstreckiger zukünftiger Straßenverlauf hergeleitet werden sollte. Alternativ oder zusätzlich kann auch vorgesehen sein, dass bei Überschreitung eines absoluten oder relativen Schwellwerts für den Fehlerwert eine dynamische, allein von einer aktuellen, die Fahrdynamik des Kraftfahrzeugs beschreibenden Größe, insbesondere dem aktuellen Lenkwinkel, abhängige Ansteuerung des Frontscheinwerfers erfolgt. Es kann also ein absoluter oder relativer, beispielsweise als Prozentsatz der aktuellen Kurvigkeit definierter, Schwellwert vorgegeben werden, oberhalb dem die Daten als zu fehlerbehaftet angesehen werden, um noch zur Ermittlung eines glaubwürdigen zukünftigen Straßenverlaufs dienen zu können. Dann ist es denkbar, dass nur noch eine herkömmliche dynamische, von einer den aktuellen Fahrzustand des Kraftfahrzeugs beschreibenden Größe abhängige Ansteuerung des Frontscheinwerfers erfolgt. Nimmt man beide Verwendungsarten für den Fehlerwert zusammen, so kann je nach Größe des Fehlerwerts mit steigendem Fehlerwert die Vorausschauweite immer weiter erniedrigt werden, bis bei Erreichen des Schwellwerts eine dynamische Ansteuerung des wenigstens einen Frontscheinwerfers, insbesondere der zwei Frontscheinwerfer, erfolgt.

Neben dem erfindungsgemäßen Verfahren betrifft die Erfindung auch ein Kraftfahrzeug, umfassend ein prädiktives Kurvenlichtsystem mit einem Steuergerät, das zur Durchführung des erfindungsgemäßen Verfahrens ausgebildet ist, wenigstens einem über das Kurvenlichtsystem ansteuerbaren Frontscheinwerfer, insbesondere zwei Frontscheinwerfern, und wenigstens einem den aktuellen Fahrzustand des Kraftfahrzeugs beschreibende Messdaten aufnehmenden Sensor, insbesondere einen Gierratensensor. Die die Fahrdynamik des Kraftfahrzeugs beschreibenden Messdaten, die mit dem wenigstens einen Sensor aufgenommen wurden, können folglich genutzt werden, um eine Vergleichskurvigkeit zu bestimmen, die mit einer aus den Verlaufsdaten abgeleiteten Kurvigkeit zur Ermittlung eines Fehlerwerts verglichen werden, der die Ansteuerung des oder der Frontscheinwerfer entsprechend beeinflusst. Das erfindungsgemäße Verfahren wird also vollkommen automatisch durch das Steuergerät durchgeführt, so dass eine verbesserte Plausibilisierung der zur Ermittlung des zukünftigen Straßenverlaufs genutzten Verlaufsdaten möglich ist.

Sämtliche Ausführungen bezüglich des erfindungsgemäßen Verfahrens lassen sich analog auf das erfindungsgemäße Kraftfahrzeug übertragen.

Weitere Vorteile und Einzelheiten der vorliegenden Erfindung ergeben sich aus den im Folgenden dargestellten Ausführungsbeispielen sowie anhand der Zeichnung. Dabei zeigen:

Fig. 1     ein erfindungsgemäßes Kraftfahrzeug,

Fig. 2     eine Prinzipskizze zur Erläuterung der Kurvigkeit, und

Fig. 3     ein Blockdiagramm zur Einbettung des erfindungsgemäßen Verfahrens in den Betriebsablauf des Kurvenlichtsystems.

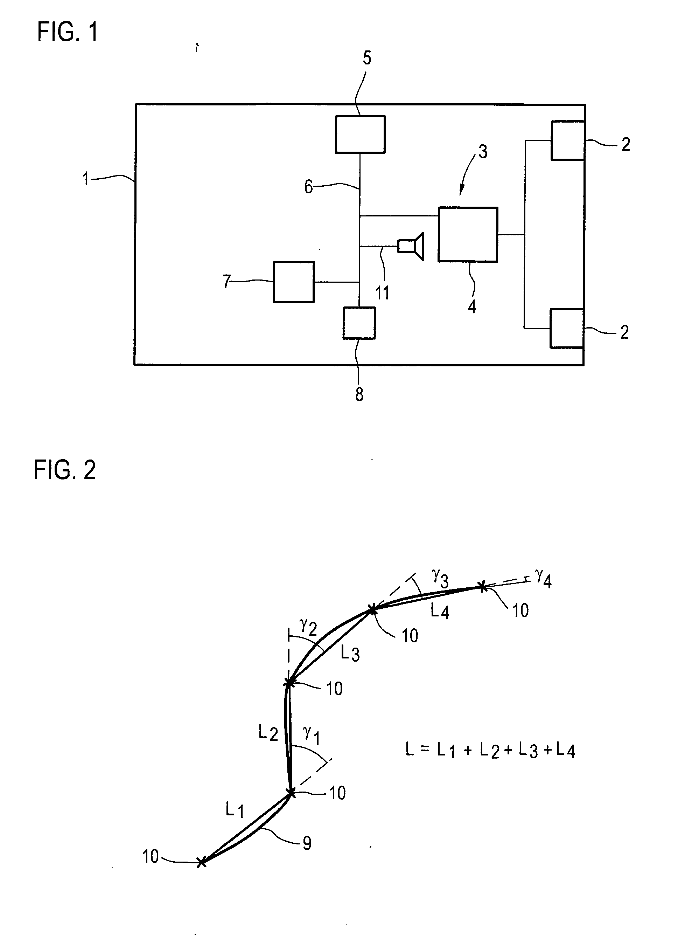

Fig. 1 zeigt ein erfindungsgemäßes Kraftfahrzeug 1 als Prinzipskizze. Es umfasst zwei zur Veränderung des Ausleuchtbereichs ansteuerbare, im vorliegenden Beispiel verschwenkbare Frontscheinwerfer 2 sowie ein prädiktives Kurvenlichtsystem 3 mit einem Steuergerät 4, welches zur Ansteuerung der Frontscheinwerfer 2 in Abhängigkeit eines aus Verlaufsdaten bestimmten zukünftigen Straßenverlaufs ausgebildet ist. Die Verlaufsdaten stammen dabei im vorliegenden Beispiel aus den digitalen Kartendaten eines Navigationssystems 5, welches über ein Bus-System 6, insbesondere einen CAN-Bus, mit dem Steuergerät 4 kommuniziert. Ebenso - unmittelbar oder mittelbar über ein anderes Fahrzeugsystem an den Bus 6 angeschlossen - umfasst das Kraftfahrzeug 1 Sensoren zur Ermittlung von den aktuellen Zustand des Kraftfahrzeugs, also die Fahrdynamik, beschreibenden Messdaten, wobei vorliegend ein Gierratensensor 7 und ein Geschwindigkeitssensor 8 dargestellt sind. Selbstverständlich können auch andere Sensoren vorgesehen sein.

Das Steuergerät 4 ist nun ferner zur Durchführung des erfindungsgemäßen Verfahrens ausgebildet, das bedeutet, es nutzt die Verlaufsdaten und die Messdaten, um daraus eine Kurvigkeit bzw. eine Vergleichskurvigkeit für einen bestimmten, an der aktuellen Position des Kraftfahrzeugs 1 endenden Fahrtstreckenabschnitt zu ermitteln und hieraus einen die Plausibilität der Verlaufsdaten beschreibenden Fehlerwert abzuleiten. Dieser Fehlerwert gibt letztlich an, wie verlässlich die Verlaufsdaten sind, die der Ermittlung des zukünftigen Straßenverlaufs zugrunde liegen, und er wird bei der Ansteuerung der Frontscheinwerfer 2 berücksichtigt.

Die der Plausibilisierung gemäß dem erfindungsgemäßen Verfahren zugrunde liegende Größe ist die Kurvigkeit, welche anhand der Prinzipskizze in Fig. 2 näher erläutert werden soll.

Dort ist ein tatsächlicher Fahrweg 9 eines Kraftfahrzeugs dargestellt. Immer nach einem Zeitabschnitt wird dabei ein neuer Punkt 10 erreicht. Die Punkte 10 sind immer um eine Strecke $L_i$ voneinander beabstandet. Zudem ergibt sich jedes mal eine Winkeländerung $\gamma_i$. Folglich ergäbe sich im Beispiel nach Fig. 2 die Kurvigkeit zu

$$K = \frac{\left|\gamma_1\right| + \left|\gamma_2\right| + \left|\gamma_3\right| + \left|\gamma_4\right|}{L}.$$

Im beschriebenen Ausführungsbeispiel des Kraftfahrzeugs 1 wird der Fahrtstreckenabschnitt, über den die Kurvigkeit betrachtet wird, über ein Zeitintervall von 5 Sekunden definiert. Daten der Sensoren 7, 8 werden alle 20 Millisekunden erhalten, was einen Zeitabschnitt definiert. Das Zeitintervall von 5 Sekunden beschreibt also eine zeitliche Fensterung, der Zeitabschnitt von 20 Millisekunden die der Berechnung der Kurvigkeit zugrunde liegende Diskretisierung. Es wird also immer die Winkeländerung $\gamma_i$ in diesen 20 Millisekunden aufgrund der Daten des Gierratensensors 7 bestimmt, wobei aus den Daten des Geschwindigkeitssensors 8 und der Länge des Zeitabschnitts die zurückgelegte Strecke gefolgert werden kann. Da eine zeitliche Fensterung vorgenommen wird, muss letztlich immer nur der älteste Wert wegfallen und der aktuellste Wert hinzugenommen werden. Es ist also ausreichend, zur Ermittlung der Vergleichskurvigkeit die Summen aktuell zu halten und den Quotienten zu bilden.

Zudem wird die Kurvigkeit auch aus den Verlaufsdaten ermittelt. Durch Vergleich der Kurvigkeit mit der Vergleichskurvigkeit wird der Fehlerwert ermittelt, wobei beispielsweise vorgesehen sein kann, dass gewichtet die Differenz der aktuellen Kurvigkeiten, aber auch die Differenz der Ableitungen des Verlaufs der beiden Kurvigkeiten zur Ermittlung des Fehlerwerts berücksichtigt werden. Eine gewichtete Summe aus den genannten Größen ist denkbar.

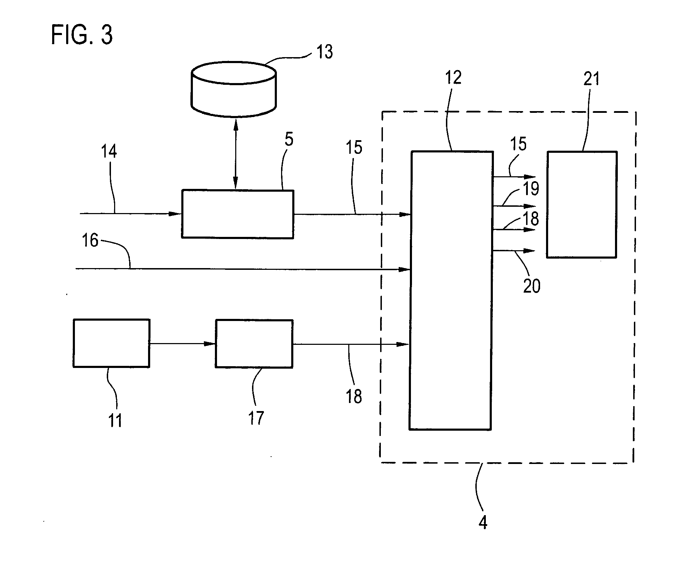

Fig. 3 zeigt in Form eines Blockdiagramms nun, wie die Plausibilisierung in das Verfahren zum Betrieb des Kurvenlichtsystems 3 eingebunden ist. Dabei wird zur Verdeutlichung auch noch eine optional im Kraftfahrzeug 1 vorhandene, in Fahrtrichtung des Kraftfahrzeugs 1 auf die Straße gerichtete Kamera 11 berücksichtigt.

Eingangsdaten eines Plausibilisierungsmoduls 12 im Steuergerät 4 sind dabei zunächst Daten des Navigationssystems 5. Dieses hat Zugriff auf digitale Kartendaten 13. Zudem erhält es als Eingabe GPS-Daten, Pfeil 14. Aus diesen Daten generiert das Navigationssystem 5 nun Verlaufsdaten, Pfeil 15, die später die Grundlage zur Ermittlung des zukünftigen Straßenverlaufs durch das Steuergerät 4 bilden sollen. Weitere Eingangsdaten für das Plausibilisierungsmodul 12 sind fahrdynamische Daten, Pfeil 16, insbesondere auch die Daten des Gierratensensors 7 und des Geschwindigkeitssensors 8. Sie umfassen folglich die Messdaten, die zur Ermittlung der Vergleichskurvigkeit verwendet werden.

Ist ferner eine Kamera 11 vorgesehen, so können auch deren Daten über eine Bildverarbeitungseinheit 17 bezüglich des zukünftigen Straßenverlaufs verarbeitet werden und weitere alternative Verlaufsdaten bilden, Pfeil 18.

Grundsätzlich können auch Daten anderer Fahrzeugsysteme berücksichtigt werden.

Das Plausibilisierungsmodul 12 ermittelt nun die Kurvigkeit und die Vergleichskurvigkeit, beispielsweise sowohl für die Daten der Kamera 11 als auch für die Daten des Navigationssystems 5. Die wie bereits beschrieben ermittelten Fehlerwerte (Pfeile 19 und 20) werden dann gemeinsam mit den Verlaufsdaten des Navigationssystems 5 (Pfeil 15) und den Verlaufsdaten der Kamera 11 (Pfeil 18) an ein Modul (bzw. mehrere Module) 21 weitergegeben, die sowohl die Verlaufsdaten als auch den oder die Fehlerwerte nutzen, um die konkreten Werte zur Ansteuerung der Frontscheinwerfer 2 zu ermitteln.

Der Fehlerwert kann beispielsweise genutzt werden, um die Vorausschaureichweite anzupassen, zusätzlich oder alternativ kann vorgesehen sein, dass bei Überschreiten eines bestimmten Schwellwerts durch den Fehlerwert gar keine prädiktive Ansteuerung mehr erfolgt, sondern zumindest temporär auf eine dynamische Ansteuerung aufgrund der aktuellen Fahrdynamik, insbesondere des Lenkwinkels, übergegangen wird.

## Patentansprüche

1. Verfahren zum Betrieb eines prädiktiven Kurvenlichtsystems (3) in einem Kraftfahrzeug (1), wobei den zukünftigen Straßenverlauf beschreibende Verlaufsdaten bei der Ansteuerung wenigstens eines Frontscheinwerfers (2) des Kraftfahrzeugs (1) berücksichtigt werden,
**dadurch gekennzeichnet,**
**dass** zur Plausibilisierung der Verlaufsdaten aus einer aus den Verlaufsdaten abgeleiteten, den Straßenverlauf über einen an der aktuellen Position des Kraftfahrzeugs (1) endenden Fahrtstreckenabschnitt beschreibenden Größe, insbesondere der Kurvigkeit, und einer aus die Fahrdynamik des Kraftfahrzeugs (1) beschreibenden Messdaten für den selben Fahrtstreckenabschnitt ermittelten Vergleichsgröße, insbesondere einer Vergleichskurvigkeit, ein die Plausibilität der Verlaufsdaten beschreibender Fehlerwert ermittelt und bei der Ansteuerung des Frontscheinwerfers (2) berücksichtigt wird.

2. Verfahren nach Anspruch 1,
**dadurch gekennzeichnet,**
**dass** als Messdaten insbesondere mittels wenigstens einem Sensor bestimmte, die jeweils aktuelle Winkeländerung aufgrund der Fahrdynamik des Kraftfahrzeugs (1) und die zurückgelegte Strecke während eines Zeitabschnitts beschreibende Messdaten verwendet werden.

3. Verfahren nach Anspruch 2,
**dadurch gekennzeichnet,**
**dass** die Winkeländerung aufgrund der Daten eines Gierratensensors (7) ermittelt wird.

4. Verfahren nach einem der vorangehenden Ansprüche,
**dadurch gekennzeichnet,**
**dass** der Fahrstreckenabschnitt über ein Zeitintervall definiert ist, welches insbesondere 2 bis 10, bevorzugt 5 Sekunden, beträgt.

5. Verfahren nach einem der vorangehenden Ansprüche,
**dadurch gekennzeichnet,**
**dass** die Messdaten jeweils für einen Zeitabschnitt von 10 bis 50 ms, insbesondere 20 ms, bestimmt werden.

**6.** Verfahren nach einem der vorangehenden Ansprüche,

**dadurch gekennzeichnet,**

**dass** neben einer Differenz der Größen, insbesondere der Kurvigkeiten, auch der Verlauf der Größen, insbesondere die Änderung der Größen, insbesondere der Kurvigkeiten, zwischen aufeinanderfolgenden Zeitabschnitten und/oder die Ableitung des Verlaufs, zur Bestimmung des Fehlerwerts berücksichtigt werden.

**7.** Verfahren nach einem der vorangehenden Ansprüche,

**dadurch gekennzeichnet,**

**dass** der Fehlerwert zur Anpassung einer Vorausschaureichweite verwendet wird und/oder bei Überschreitung eines absoluten oder relativen Schwellwerts für den Fehlerwert eine dynamische, allein von einer aktuellen, die Fahrdynamik des Kraftfahrzeugs (1) beschreibenden Größe, insbesondere dem aktuellen Lenkwinkel, abhängige Ansteuerung des Frontscheinwerfers (2) erfolgt.

**8.** Kraftfahrzeug (1), umfassend ein prädiktives Kurvenlichtsystem (3) mit einem Steuergerät (4), ausgebildet zur Durchführung des Verfahrens nach einem der Ansprüche 1 bis 7, wenigstens einen über das Kurvenlichtsystem (3) ansteuerbaren Frontscheinwerfer (2) und wenigstens einen den aktuellen Fahrzustand des Kraftfahrzeugs (1) beschreibende Messdaten aufnehmenden Sensor, insbesondere einen Gierratensensor (7).

**Claims**

**1.** Method for operating a predictive cornering light system (3) in a motor vehicle (1), course data describing the future course of the road being taken into consideration when controlling at least one front headlight (2) of the vehicle (1), **characterised in that**, to check the plausibility of the course data from both a value which is derived from the course data and describes the course of the road, in particular the degree of bendiness, over a route portion ending at the current position of the motor vehicle (1) and a comparative value, in particular a comparative degree of bendiness, determined from measurement data describing the driving dynamics of the motor vehicle (1) for the same route portion, an error value, describing the plausibility of the course data, is determined and taken into account when the front headlight (2) is controlled.

**2.** Method according to claim 1, **characterised in that** in particular measurement data which are determined by at least one sensor and describe the current change of angle on the basis of the driving dynamics of the motor vehicle (1) and the distance covered during a period of time are used as measurement data.

**3.** Method according to claim 2, **characterised in that** the change of angle is determined on the basis of data from a yaw rate sensor (7).

**4.** Method according to any of the preceding claims, **characterised in that** the route portion is defined over a time interval which is in particular from 2 to 10 seconds, preferably 5 seconds.

**5.** Method according to any of the preceding claims, **characterised in that** the measurement data are each determined for a period of time of from 10 to 50 ms, in particular 20 ms.

**6.** Method according to any of the preceding claims, **characterised in that** in addition to a difference between the values, in particular between the degrees of bendiness, the progression of the values, in particular the changes in the values, in particular in the degrees of bendiness, between successive periods of time and/or the derivation of the curve, is also taken into account in order to determine the error value.

**7.** Method according to any of the preceding claims, **characterised in that** the error value is used to adapt a predicted range and/or, if an absolute or relative threshold value for the error value is exceeded, the front headlight (2) is controlled dynamically, depending solely on a current value which describes the driving dynamics of the motor vehicle (1), in particular on the current steering angle.

**8.** Motor vehicle (1), comprising a predictive cornering light system (3) having a controller (4) which is designed to carry out the method according to any of claims 1 to 7, at least one front headlight (2) which can be controlled by means of the cornering light system (3), and at least one sensor, in particular a yaw-rate sensor (7), which receives measurement data describing the current driving state of the motor vehicle (1).

**Revendications**

**1.** Procédé de fonctionnement d'un système d'éclairage prédictif de courbes (3) dans un véhicule automobile (1), dans lequel on tient compte de données de tracé décrivant le tracé routier futur lors de la commande au moins des phares avant (2) du véhicule automobile (1),

**caractérisé en ce que** :

pour la plausibilité des données de tracé, on détermine, à partir d'une grandeur tirée des données de tracé et décrivant le tracé routier via une section de la distance parcourue se terminant dans la position courante du véhicule automobile (1), en particulier de la sinuosité, et à partir d'une grandeur témoin déterminée pour la même section de distance parcourue à partir de données de mesure décrivant la dynamique de conduite du véhicule automobile (1), en particulier une sinuosité témoin, une valeur par défaut décrivant la plausibilité des données de tracé et qui est prise en compte lors de la commande des phares avant (2).

2. Procédé selon la revendication 1,
   **caractérisé en ce que** :

   on utilise comme données de mesure en particulier des données de mesure déterminées via au moins un capteur décrivant la variation angulaire respectivement présente sur base de la dynamique de conduite du véhicule automobile (1) et la distance parcourue au cours d'une section de temps.

3. Procédé selon la revendication 2,
   **caractérisé en ce que** :

   la variation angulaire est déterminée sur la base des données du capteur de vitesse de lacet (7).

4. Procédé selon l'une quelconque des revendications précédentes,
   **caractérisé en ce que** :

   la section de distance parcourue est définie sur un intervalle de temps qui est en particulier de 2 à 10, de préférence de 5 secondes.

5. Procédé selon l'une quelconque des revendications précédentes,
   **caractérisé en ce que** :

   les données de mesure sont déterminées respectivement pour une section de temps de 10 à 50 ms, en particulier de 20 ms.

6. Procédé selon l'une quelconque des revendications précédentes,
   **caractérisé en ce que** :

   l'on tient compte pour déterminer la valeur par défaut, à côté d'une différence des grandeurs, en particulier des sinuosités, également de l'évolution des grandeurs, en particulier de la variation des grandeurs, en particulier des sinuosités, entre des sections temporelles successives et/ou de la dérivation du tracé.

7. Procédé selon l'une quelconque des revendications précédentes,
   **caractérisé en ce que** :

   la valeur par défaut est utilisée pour ajuster une zone de desserte prédictive et/ou, lors du dépassement d'une valeur de seuil absolue ou relative pour la valeur par défaut, il se produit une commande dynamique des phares avant (2) qui est fonction uniquement d'une grandeur courante décrivant la dynamique de conduite du véhicule automobile (1), en particulier l'angle de direction courant.

8. Véhicule automobile (1), comprenant un système d'éclairage prédictif de courbes (3) avec un appareil de commande (4), conçu pour réaliser le procédé selon l'une quelconque des revendications 1 à 7, au moins des phares avant (2) qui peuvent être commandés via le système d'éclairage de courbes (3) et au moins un capteur recevant des données de mesure décrivant l'état de conduite courant du véhicule automobile (1), en particulier un capteur de vitesse de lacet (7).

FIG. 1

FIG. 2

$$L = L_1 + L_2 + L_3 + L_4$$

FIG. 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20020080617 A1
- EP 1415856 A1